Europäisches Patentamt

European Patent Office

Office européen des brevets

(19)

(11) Veröffentlichungsnummer: **0 168 349**
**B1**

## EUROPÄISCHE PATENTSCHRIFT

(12)

(45) Veröffentlichungstag der Patentschrift:
31.08.88

(51) Int. Cl.⁴: **F 16 B 13/12**

(21) Anmeldenummer: **85810297.3**

(22) Anmeldetag: **26.06.85**

(54) Spreizdübel.

(30) Priorität: **09.07.84 DE 3425239**

(43) Veröffentlichungstag der Anmeldung:
**15.01.86 Patentblatt 86/3**

(45) Bekanntmachung des Hinweises auf die Patenterteilung:
**31.08.88 Patentblatt 88/35**

(84) Benannte Vertragsstaaten:
**CH DE FR GB LI**

(56) Entgegenhaltungen:
**EP-A-0 087 648**
**DE-A-3 124 823**
**DE-B-2 520 115**
**GB-A-776 249**
**US-A-1 821 401**
**US-A-1 848 142**
**US-A-2 314 770**
**US-A-3 421 404**
**US-A-4 282 629**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**

(74) Vertreter: **Wildi, Roland, Hilti Aktiengesellschaft Patentabteilung, FL- 9494 Schaan (LI)**

EP 0 168 349 B1

## Beschreibung

Die Erfindung betrifft einen Spreizdübel mit einer sich durch Einziehen eines Spreizkörpers weitbaren Spreizhülse, wobei die Spreizhülse zumindest einen zum setzrichtungsseitigen Ende hin offenen Längsschlitz und am setzrichtungsseitigen Ende wenigstens einen axial verlaufenden, mit dem Spreizkörper über eine unter Spreizbedingungen zerstörbare Brücke einstückig verbundenen Längssteg aufweist.

Dübel der vorgenannten Art (EP-A-0 087 648) zeichnen sich im besonderen durch einen einfachen Setzvorgang, universelle Verwendbarkeit und ausreichend hohe, mit zunehmender Belastung sich erhöhende Verankerungswerte aus. Die Spreizhülse wird durch Einziehen des Spreizkörpers mittels einer Schraube gespreizt. Dabei können, insbesondere mangels einer zuverlässigen Verdrehsicherung des Spreizkörpers unzureichende Verankerungen entstehen.

Andere bekannte Spreizdübel (DE-A-3 124 823) verfügen über eine Spreizhülse mit sich in Einführrichtung erweiternder Zentralbohrung, in der ein im wesentlichen hülsenförmiger Spreizkörper verschiebbar angeordnet ist. Mittels eines in den Spreizkörper eingreifenden Gewindebolzens wird der Spreizkörper in die Spreizhülse hineingezogen.

Zur Verdrehsicherung kann der Spreizkörper zur Aussenkontur hin offene Aussparungen aufweisen, in die die Längsstege der Spreizhülse eingreifen.

Der Nachteil dieser bekannten Spreizdübel liegt darin, dass sie aus mehreren Teilen bestehen. Dadurch erhöhen sich die Herstellkosten, insbesondere aufgrund der aufwendigen Montage der Dübel.

Der Erfindung liegt die Aufgabe zugrunde, einen wirtschaftlich herstellbaren, funktionssicheren Spreizdübel mit bei zunehmender Belastung vergrösserndem Verankerungswert zu schaffen, der sich im besonderen durch einfachen Aufbau auszeichnet.

Erfindungsgemäss wird die Aufgabe dadurch gelöst, dass am Spreizkörper vom Längssteg durchsetzte, zur Aussenkontur hin offene Aussparungen vorgesehen sind, die Brücke im wesentlichen um 180° gekrümmt ist und die Enden der Brücke entgegen der Setzrichtung weisend mit dem Längssteg und dem setzrichtungsseitigen Ende des Spreizkörpers verbunden sind.

Die einstückige Verbindung des Spreizkörpers mit dem Längssteg über eine Brücke lässt sich besonders einfach bei einem Spreizdübel aus Blech herstellen. Der Spreizdübel kann gesamthaft aus einem einteiligen Blech-Zuschnitt im Biegeverfahren in seine endgültige Form gebracht werden. Ebenso ist es möglich, die Spreizhülse im Biegeverfahren zu formen und den Spreizkörper durch Tiefziehen in seine Form zu bringen. Zweckmässig wird der Spreizkörper bereits im Zuschnitt mit einem Gewinde versehen, das letztlich dem Angriff eines Gewindebolzens dient.

Während durch das Einliegen des Längssteges in den Aussparungen am Spreizkörper eine zuverlässige Verdrehsicherung für den Spreizkörpers geschaffen wird, begünstigt die erfindungsgemässe Krümmung die Zerstörung oder Verformung der Brücke unter Spreizbedingungen.

Die Spreizhülse oder der Spreizkörper können beispielsweise zweigeteilt sein, wobei die einzelnen Teile jeweils über zumindest einen Längssteg und eine diesem zugeordnete Brücke über das nicht geteilte Element des Spreizdübels zusammengehalten werden.

Zur Erzielung der Verankerung wird der Spreizkörper durch Eingriff des Gewindebolzens in Verjüngungsrichtung der Zentralbohrung gezogen, wobei es einleitend zu einer Zerstörung der Brücke und in der Folge zum Verschieben des nun freigesetzten Spreizkörpers kommt.

Um zu erreichen, dass die Zerstörung der Brücke unter Spreizbedingungen bei vorbestimmbarer definierter Kraft und an definierter Stelle auftritt, weist die Brücke mit Vorteil eine unter Spreizbedingungen sich zerstörende oder sich verformende Querschnittschwächung auf. Die Querschnittschwächung kann entweder durch partielle dickenmässige Verjüngung oder durch eine die Breite der Brücke reduzierende Einschnürung geschaffen sein. Ebenso ist es möglich, beispielsweise durch eine Perforation die geschwächte Stelle zu schaffen.

Die Erfindung wird nachstehend anhand von Zeichnungen, die ein Ausführungsbeispiel eines erfindungsgemässen Spreizdübels wiedergeben, näher erläutert. Es zeigen:

Fig. 1    den in ein Bohrloch eingeführten Spreizdübel in Ausgangsstellung, halb Schnitt, halb Ansicht;

Fig. 1a   den Spreizdübel nach Fig. 1 bei Spreizbeginn, im Schnitt;

Fig. 1b   den Spreizdübel nach Fig. 1 in gespreiztem Zustand, im Schnitt;

Fig. 2    den Zuschnitt des Spreizdübels nach Fig. 1;

Fig. 3    einen Schnitt durch den Zuschnitt gemäss Schnittverlauf III-III der Fig. 2;

Fig. 4    den Spreizdübel nach Fig. 1 in einer Stufe der Formgebung durch Biegen.

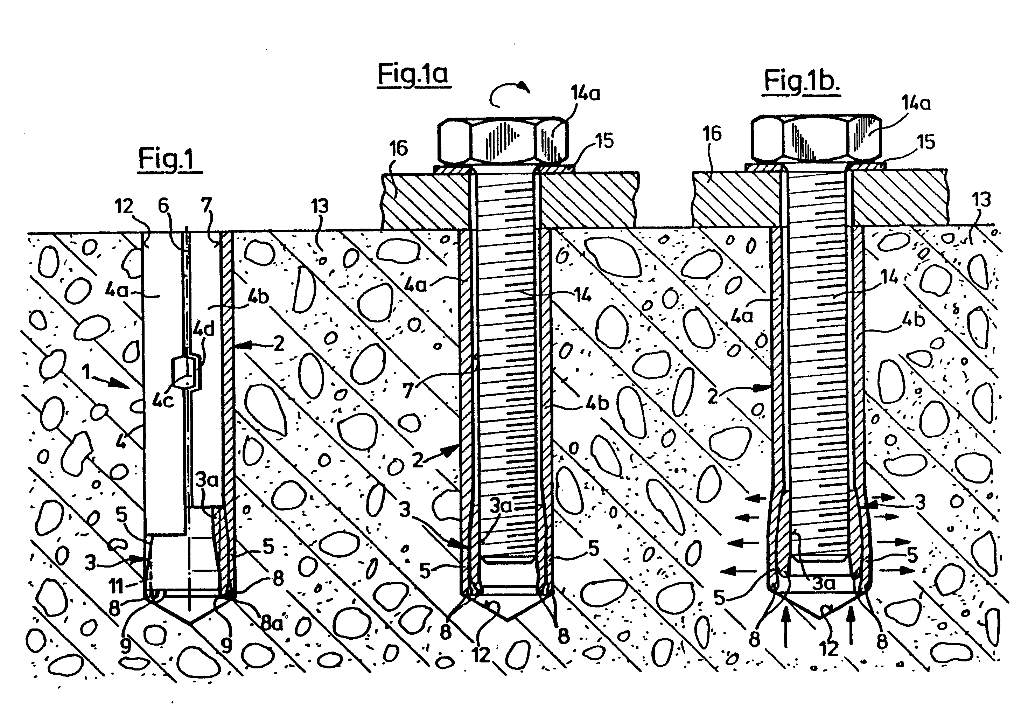

In Fig. 1 ist der Spreizdübel insgesamt mit 1 bezeichnet. Er besteht im wesentlichen aus einer insgesamt mit 2 bezeichneten Spreizhülse und einem insgesamt mit 3 bezeichneten Spreizkörper.

Die Spreizhülse 2 ist vorwiegend aus einem Rohrabschnitt 4 gebildet, an den sich in Einführrichtung zwei Längsstegen 5 anschliessen. Der Rohrabschnitt 4 ist durch zwei Längsschlitze 6 in zwei Schalenhälften 4a, 4b unterteilt. Gegenseitiges axiales Verschieben der Schalenhälften 4a, 4b wird durch den Eingriff von Arretiernasen 4c in korrespondierende Ausnehmungen 4d unterbunden. Die Zentralbohrung 7 des Rohrabschnittes 4 erweitert sich im einführrichtungsseitigen Endbereich in Einführrichtung kegelig.

Der Spreizkörper 3 weist im wesentlichen eine mit der Erweiterung der Zentralbohrung 7 korrespondierende kegelige Aussenkontur auf. Über zwei bogenförmige Brücken 8 ist der Spreizkörper 3 einstückig mit zwei Längsstegen 5 verbunden. Die Brücken 8 weisen eine durch einen Einschnitt 9 gebildete Querschnittsschwächung 8a auf.

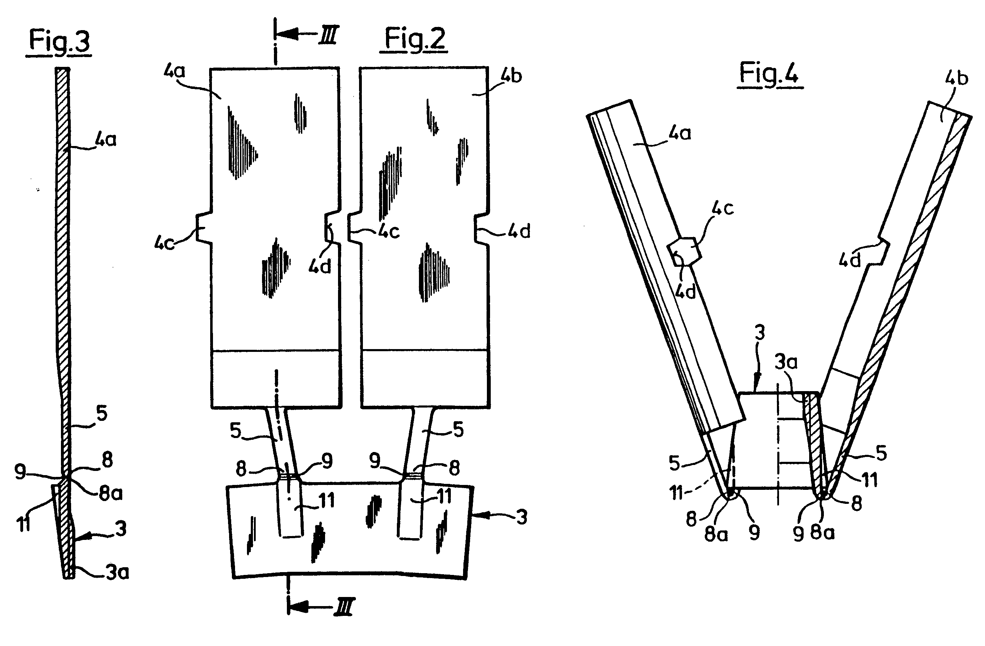

Wie der Fig. 2 zu entnehmen ist, besteht der Zuschnitt des Spreizdübels 1 aus den vorerst rechteckigen Schalenhälften 4a, 4b, den Längsstegen 5, je einer an diese anschliessenden Brücke 8 und dem Spreizkörper 3. Die Schalenhälften 4a, 4b sind mit den Arretiernasen 4c und den Ausnehmungen 4d versehen. Die Fig. 3 verdeutlicht die geringere Dicke des Längssteges 5 gegenüber der Schalenhälfte 4a und verdeutlicht auch den Einschnitt 9 in der Brücke 8. Ferner ist eine Aussparung 11 für jeden Längssteg 5 am Spreizkörper 3 erkennbar.

Die Fig. 4 zeigt die vorgängige Formung des Spreizkörpers 3, der ein Innengewinde 3a aufweist. Ferner sind die Aussparungen 11 erkennbar, in die sich die Längsstege 5 versenkend einlegen. Dadurch wird einerseits eine Drehverriegelung des Spreizkörpers 3 gegenüber der Spreizhülse 2 bzw. den Schalenhälften 4a, 4b und andererseits eine maximale radiale Weitung der Spreizhülse 2 gewährleistet.

Zum Verankerungseinsatz wird der Spreizdübel 1 in ein vorgefertigtes Bohrloch 12 in einem Bauwerksteil 13 eingeführt, wie dies die Fig. 1 zeigt. Alsdann wird eine Schraube 14 unter Durchgriff einer Unterlegscheibe 15 und eines zu befestigenden Teiles 16 in den Spreizkörper 3 eingeschraubt. Der Kopf 14a der Schraube 14 läuft sodann an der Unterlegscheibe 15 auf und drückt diese gegen den Teil 16 und diesen wiederum gegen den Bauwerksteil 13. Durch weiteres Drehen der nunmehr axial nicht mehr verschiebbaren Schraube 14 werden von dieser Zugkräfte in den Spreizkörper 3 eingeleitet. Übersteigen diese die Festigkeit der Querschnittsschwächung 8a der Brücken 8, so erfolgt hier ein Bruch, und der Spreizkörper 3 wird sodann in Verjüngungsrichtung in die Zentralbohrung 7 eingezogen. Die Fig. 1a zeigt diese Funktionsstellung, die dem Beginn des Spreizvorganges entspricht. Für den Spreizvorgang selbst wird die Schraube 14 weiter angezogen, wodurch der Spreizkörper 3 tiefer in den kegeligen Abschnitt der Zentralbohrung 7 gezogen wird und die Spreizhülse 2 sich dadurch im Bauwerksteil 3, wie in Fig. 1b durch Pfeile angedeutet, verspreizt. Der Spreizvorgang kann nunmehr abgebrochen werden. Allfällige spätere über die Spreizschraube 14 eingeleitete erhöhte Zuglast führt zu einem weiteren Nachspreizen und damit zu erhöhtem Verankerungswert.

## Patentansprüche

1. Spreizdübel mit einer sich durch Einziehen eines Spreizkörpers weitbaren Spreizhülse, wobei die Spreizhülse zumindest einen zum setzrichtungsseitigen Ende hin offenen Längsschlitz und am setzrichtungsseitigen Ende wenigstens einen axial verlaufenden, mit dem Spreizkörper über eine unter Spreizbedingungen zerstörbare Brücke einstückig verbundenen Längssteg aufweist, dadurch gekennzeichnet, dass am Spreizkörper (3) vom Längssteg (5) durchsetzte, zur Aussenkontur hin offene Aussparungen (11) vorgesehen sind, die Brücke (8) im wesentlichen um 180° gekrümmt ist und die Enden der Brücke (8) entgegen der Setzrichtung weisend mit dem Längssteg (5) und dem setzrichtungsseitigen Ende des Spreizkörpers (3) verbunden sind.

2. Spreizdübel nach Anspruch 1, dadurch gekennzeichnet, dass die Brücke (8) zum Zerstören unter Spreizbedingungen eine Querschnittsschwächung (8a) aufweist.

## Claims

1. An expansible dowel having an expansible sleeve which is widenable by drawing-in of an expansion body, in which respect the expansible sleeve has at least one longitudinal slot which is open towards the setting-direction-sided end and at the setting-direction-sided end at least one axially extending longitudinal web which is connected in one piece to the expansion body by way of a bridge which is destructible under expansion conditions, characterised in that cutouts (11) which are penetrated by the longitudinal web (5) and which are open towards the outer contour are provided on the expansion body (3), the bridge (8) is curved substantially through 180° and the ends of the bridge (8), pointing contrary to the setting direction, are connected to the longitudinal web (5) and the setting-direction-sided end of the expansion body (3).

2. An expansible dowel according to claim 1, characterised in that the bridge (8) has a cross-sectional weakening (8a) for the destruction under expansion conditions.

## Revendications

1. Cheville à expansion avec une douille expansible pouvant être élargie par l'insertion d'un élément d'écartement, la douille expansible présentant au moins une fente longitudinale ouverte en direction de l'extrémité du côté enfoncement et, à l'extrémité du côté enfoncement, au moins une barrette longitudinale s'étendant dans le sens axial et reliée en une seule pièce à l'élément d'écartement par l'intermédiaire d'un pont destructible dans des conditions d'expansion, caractérisée en ce que sur l'élément d'écartement (3) sont prévus des évidements (11) traversés par la barrette longitudinale (5) et ouverts en direction du contour extérieur, que le pont (8) est cintré sensiblement sur 180° et que les extrémités du pont (8) opposées à la direction d'enfoncement sont reliées à la barrette longitudinale (5) et à l'extrémité de l'élément d'écartement (3) du côté enfoncement.

2. Cheville à expansion selon la revendication 1, caractérisée en ce que le pont (8) présente, pour la destruction dans des conditions d'expansion, une zone d'affaiblissement de section (8a).

Fig.1a

Fig.1b.

Fig.1

0 168 349

Fig.3

Fig.2

Fig.4

0 168 349

3